# EUROPÄISCHE PATENTSCHRIFT

(11) **EP 2 895 844 B1**
(45) Veröffentlichungstag und Bekanntmachung des Hinweises auf die Patenterteilung: **07.11.2018**
(21) Anmeldenummer: 13774619.4
(22) Anmeldetag: 12.09.2013
(51) Int. Cl.: G01N 21/65, G01J 3/427, G01J 3/44, G02B 27/14, G01N 21/39

(54) **VORRICHTUNG MIT EINER ANORDNUNG OPTISCHER ELEMENTE**
APPARATUS WITH AN ARRANGEMENT OF OPTICAL ELEMENTS
DISPOSITIF COMPRENANT UN AGENCEMENT D'ÉLÉMENTS OPTIQUES

(30) Priorität: 12.09.2012 DE 102012216164
(43) Veröffentlichungstag der Anmeldung: 22.07.2015
(73) Patentinhaber: Forschungsverbund Berlin e.V., 12489 Berlin (DE)
(72) Erfinder: MAIWALD, Martin, 12045 Berlin (DE); SUMPF, Bernd, 12527 Berlin (DE)
(74) Vertreter: Gulde & Partner
(86) Internationale Anmeldenummer: PCT/EP2013/068938
(87) Internationale Veröffentlichungsnummer: WO 2014/041089

(56) Entgegenhaltungen:
- EP-A1- 0 472 371
- DE-A1-102005 054 184
- US-A1- 2005 105 084
- US-A1- 2005 128 476
- US-A1- 2012 099 102

## Beschreibung

### Technisches Gebiet

Die Erfindung betrifft eine Vorrichtung für die Raman-Spektroskopie mit einer Anordnung optischer Elemente mit Anregungslichtquellen. Insbesondere betrifft die Erfindung eine Vorrichtung mit einer Anordnung optischer Bauelemente mit Anregungslichtquellen mit unterschiedlichen Wellenlängen zur Anregung einer Probe in einer Weise, dass von der Probe in Folge der Anregung zurück gestreutes Licht einer Raman-spektroskopischen Analyse zugänglich wird.

### Stand der Technik

Chemische, physikalische und biologische Proben lassen sich bekanntermaßen mittels Raman-Spektroskopie identifizieren und analysieren. Regt man eine Probe mit Licht, z.B. monochromatischem Laserlicht, an, so wird neben der Absorption und Emission ein geringer Teil des Lichts inelastisch gestreut. Die hieraus für jede Probe charakteristischen Signale werden Raman-Signale genannt. Sie sind zur Anregungswellenlänge sowohl langwellig (Stokes Bereich) als auch zu kürzeren Wellenlängen (Anti-Stokes Bereich) hin spektral verschoben. Auf Grund der bei Raumtemperatur typischer Weise höheren Intensität der Raman-Signale im Stokes Bereich wird dieser bevorzugt für die Identifikation und Analyse einer Probe genutzt.
Als Anregungswellenlänge in der Raman-Spektroskopie wird Laserlicht typischer Weise vom ultravioletten (UV) Spektralbereich, z.B. 260 nm bis zum Nah-Infraroten (NIR) Spektralbereich, z.B. 1500 nm, eingesetzt. Die Wahl der Anregungswellenlänge wird je nach Probeneigenschaft bzw. Art der Anwendung gewählt.
Der Wirkungsquerschnitt zur Erzeugung der Raman-Signale hängt proportional zu λ⁻⁴ von der Anregungswellenlänge λ ab. Eine Anregung bei kürzeren Wellenlängen kann demnach zu höheren Raman-Intensitäten führen.

Anregungen, insbesondere im ultravioletten und visuellen (VIS) Spektralbereich, können weiterhin bei bestimmten Proben zu Resonanzeffekten führen (Resonanz-Raman-Spektroskopie) und die schwachen Raman-Signale um mehrere Größenordnungen verstärken.

Neben den Raman-Signalen können jedoch auch Fluoreszenzsignale entstehen. Diese überlagern typischer Weise die schwachen Raman-Signale und verhindern bzw. erschweren somit eine Raman-spektroskopische Analyse der Probe. Ist diese Eigenschaft der Probe im Vorfeld der Untersuchungen bekannt, lässt sich mit einer geeigneten Wahl der Anregungswellenlänge z.B. im NIR-Spektralbereich die gleichzeitige Anregung von Fluoreszenzsignalen vermeiden.

Die Wahl der Anregungswellenlänge bestimmt damit die Qualität der gemessenen Raman-Spektren. Insbesondere für unbekannte Proben sind somit Voruntersuchungen für eine geeignete Wahl der Anregungswellenlänge notwendig. Diese ist dann für das optische Messsystem weitgehend festgelegt.

Das optische Messsystem bzw. die Transferoptik, d.h. die Elemente zur Anregung von Proben und zur Sammlung von Raman-Signalen der Proben zu Spektralanalysezwecken, werden auch als Optoden bezeichnet.

Eine geeignete Optode führt das Anregungslicht zur Probe. Ein speziell auf die Anregungswellenlänge angepasster Bandpassfilter unterdrückt das von der Anregungsquelle emittierte Störlicht wie z.B. Plasmalinien bei Gaslasern bzw. verstärkter spontaner Emission (amplified spontaneous emission, ASE) bei Diodenlasern. Auch unerwünschte Signale von Quarzglasfasern, mit der das Anregungslicht zur Optode hin transportiert wurde, können so herausgefiltert werden. Diese Bandpassfilter besitzen eine nur schmale Transmissionskurve und sind zur Anregungswellenlänge ausgewählt.

Im Sammelpfad wird das von der Probe zurück gestreute Licht eingesammelt und über eine geeignete Optik in ein System zur spektral selektiven Detektion abgebildet. Hierzu werden typischer Weise dispersive Elemente zur spektralen Trennung und Vielkanaldetektoren, z.B. CCDs, eingesetzt.

Zwischen der Intensität eines Anregungslasers und der Intensität der erzeugten Raman-Signale liegen mehrere Größenordnungen. Eine Übersteuerung bzw. Sättigung von Pixeln einer CCD ist hier zu vermeiden, da überschüssige Ladungen in benachbarte Pixel übertragen werden ("Blooming" oder "Ausblühen") und es zu Artefaktbildung in den Raman-Spektren kommen kann. Die Raman-Signale müssen demzufolge im Sammelpfad spektral vom elastisch gestreuten Laserlicht getrennt werden, bevor sie den Detektor erreichen. Dies geschieht typischer Weise mit spektral selektiven Elementen wie z.B. Monochromatoren oder optischen Filtern. Für die Detektion von Stokes-Linien können Langpassfilter bzw. Notchfilter gewählt werden. Diese sind wie auch der im Anregungspfad befindliche Bandpassfilter an die Wellenlänge der Anregungslichtquelle und dem spektralen Inspektionsbereich angepasst.

Weitere optische Elemente wie Linsen, Spiegel, Filter und Glasfasern befinden sich innerhalb der Optode und sind typischer Weise zum Schutz von einem Gehäuse umgeben. Das Laserlicht bzw. die Raman-Signale gelangen über ein optisches Fenster zur Probe bzw. zurück in die Optode.

Die Untersuchung von unbekannten Substanzen, wie sie z.B. für sicherheitsspezifische Anwendungen an Flughäfen und Grenzstationen, für medizinische oder polizeiliche Anwendungen oder auch im privaten Bereich interessant ist, wird durch die einmalige Festlegung von Lichtquellen, Optiken und Filtersätzen deutlich erschwert. Dies gilt umso mehr für die der genannten Anwendungen zu favorisierenden portablen Geräte für vor Ort Messungen.

Bei herkömmlichen Anordnungen optischer Bauelemente zur Raman-Spektroskopie sind die optischen Elemente innerhalb einer Optode fest verbaut. Für einen Wechsel der Anregungswellenlänge müssen die Filter (Bandpassfilter und z.B. Langpassfilter) jedoch auf Grund ihrer spektralen Eigenschaften ersetzt werden. Ein Umbau der Optode ist somit notwendig.

Da die optischen Elemente innerhalb einer Optode an feste Positionen justiert und montiert sind, kann der Abstand zwischen einer Anregungs- bzw. Sammellinse und dem optischen Fenster einer Optode somit innerhalb eines Messsystems auch nicht variiert werden. Dieser Abstand bestimmt die Position des Laserfokus (bzw. des Sammelflecks) außerhalb der Optode. Bei festem Abstand können diese Positionen nicht an die optischen Eigenschaften einer z.B. transparenten oder trüben Probe angepasst werden. Auch hier ist ein aufwändiger Umbau der Optode notwendig.

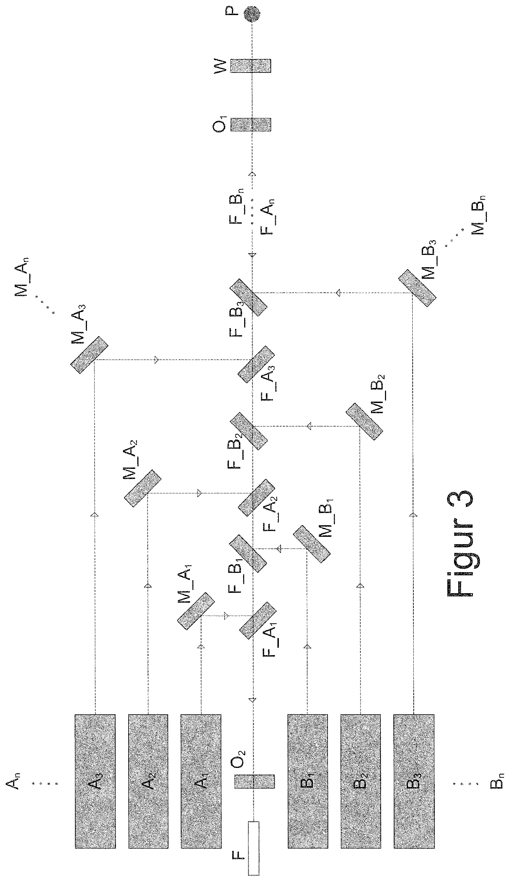

Eine multispektrale Beleuchtungsvorrichtung für Fluoreszenz-Untersuchungen ist in DE 10 2005 054 184 A1 beschrieben. McCain et al. beschreiben in "Multi-excitation Raman spectroscopy technique for fluorescense rejection", OPTICS EXPRESS, Vol. 16 No. 15, 21. Juli 2008, ein Lasersystem mit acht benachbarten (782,6 nm - 794,3 nm) Wellenlängen stabilisierten Diodenlasern. Obwohl hier acht verschiedene Anregungswellenlängen eingesetzt werden, sind diese bezogen auf die oben genannten Punkte, insbesondere hinsichtlich der Eigenschaften der Raman-Streuung als vergleichbar anzusehen. Diese Wellenlängen dienen nicht der Auswahl einer für den Raman-Effekt optimalen Anregung, sondern zur Selektion der Raman-Signale von der störenden Fluoreszenz durch Messung der Spektren bei Anregung mit den verschiedenen Wellenlängen. Bei diesem als "Shifted Excitation Difference Raman Spectroscopy" (SERDS) bekannten Verfahren werden Spektren bei nur leicht unterschiedlichen Anregungswellenlängen gemessen. Da die Raman-Signale in den Ramanspektren der beiden Anregungen um die Anregungsverschiebung verschoben sind, aber gleichartige Hintergrund-Signale (z.B. durch Fluoreszenz) aufweisen, können durch Differenzbildung zwischen den Spektren die Raman-Signale der Probe von den Hintergrund-Signalen (z.B. Fluoreszenz-Signale) getrennt werden.
Für den Bereich der acht Laser war ein Bandpassfilter kommerziell nicht verfügbar. Somit wurde zur Unterdrückung der ASE im Stokes-Bereich ein Kurzpassfilter eingesetzt. Ein Langpassfilter (F2 in Fig. 3) blockt das Laserlicht. Auch hier wäre ein Wechsel zu einer Anregungswellenlänge, die zu einer signifikant veränderten Raman-Intensität führen könnte, wie z.B. 488 nm, mit einer Anpassung des Bandpassfilters und Langpassfilters und somit mit einem aufwändigen Umbau des beschriebenen Messsystems verbunden.

Ebenfalls die Anwendung von SERDS adressiert das US-Patent 7,982,869. Es beschreibt einen Raman-Analyseapparat, der durch die Kombination von dreidimensionalen Bragg-Elementen mit konventionellen Lasern und Detektoren die Anwesenheit von ausgewählten Substanzen von Interesse detektieren kann, wobei der Apparat kostengünstig und in der Größe weniger Kubikzentimeter hergestellt ist und damit als tragbare Vorrichtung verwendet werden kann. Insbesondere kann eine komplexere Ramananalyse mittels Laserquellen für zwei nah benachbarte Anregungswellenlängen erfolgen, da der Fluoreszenzhintergrund unabhängig von der Anregungswellenlänge ist, während sich die Spektrallinien mit der Änderung der Anregungswellenlänge verschieben. Dabei kann das Resultat der Ramanstreuung über dieselbe Optik gesammelt werden, wenn die beiden Laserquellen die Probe sequentiell anregen. Es wird weiterhin eine Subtraktion der beiden Anregungsspektren zur Beseitigung des Fluoreszenzhintergrunds und ein Schaltkreis für die Analyse des Differenzspektrums offenbart. Eine Steuerung, Optimierung oder Variation der Anregungswellenlänge(n) für das Raman-Signal wird jedoch nicht offenbart.

Die Anpassung der Position des Anregungsfleckes beschreibt die Patentanmeldung US 2004/0160601 für eine Raman-Spektroskopieanordnung mit niedriger spektraler Auflösung für die Verwendung in tragbaren und/oder handlichen Analysegeräten. Der Fokus des Anregungsstrahls kann dabei durch Austausch einer optischen und mechanischen Komponente ("end cap") angepasst werden. Diese Anpassung kann jedoch nur in vorgegebenen, diskreten Stufen erfolgen.

### Offenbarung der Erfindung

Die vorliegende Erfindung befasst sich mit der Aufgabe, eine Vorrichtung mit einer Anordnung optischer Bauelemente anzugeben, die es erlaubt, mehr als zwei Anregungslichtquellen mit spektral weit auseinander liegenden Wellenlängen zur Raman-spektroskopischen Analyse in tragbaren und/oder handlichen Geräten ohne jeglichen Justage- bzw. Montageaufwand zu realisieren. Darüber hinaus kann die Erfindung auch in SERDS-basierten Systemen Anwendung finden, ist aber nicht auf solche Anwendungen beschränkt.

Die vorliegende Erfindung schlägt daher eine Vorrichtung für die Raman-Spektroskopie mit einer Anordnung optischer Bauelemente nach Anspruch 1 vor.
Die Vorrichtung umfasst Anregungslichtquellen für die Emission einzelner Lichtstrahlen mit unterschiedlichen Wellenlängen, deren spektraler Abstand in Wellenzahlen äquidistant zueinander ist. Der Abstand in Wellenzahlen ist vorzugsweise größer als das typische spektrale Fenster aller hinreichend notwendigen Raman-Signale zur Identifikation von unbekannten Stoffen. Das spektrale Fenster im Sinne der vorliegenden Erfindung ist derjenige spektrale Bereich, in dem interessierende Raman-Signale generiert werden können.
Ein besonderer Vorteil besteht darin, dass mit der erfindungsgemäßen Vorrichtung für unbekannte Proben ein Raman-Spektrum mit einer Vielzahl von Anregungslichtquellen über einen großen Spektralbereich erzeugt werden kann und somit für die Auswertung des Raman-Spektrums der ggf. unbekannten Proben eine günstige Wellenlänge verwendet werden kann. Insbesondere ist es vorteilhaft, dass keine bewegten optischen Elemente zur Umschaltung zwischen den Wellenlängen erforderlich sind.
Dies wird dadurch erreicht, dass die Vorrichtung eine Vielzahl von n>2 Anregungslichtquellen umfasst zur Emission von n Anregungsstrahlungen mit jeweils unterschiedlichen, in Wellenzahlen äquidistant von einander beabstandeten Emissionen, die jeweils entlang eines von n unterschiedlichen Lichtpfaden geführt sind; wobei jedem Lichtpfad eine Umlenkvorrichtung zugeordnet ist, die für eine jeweilige erste Wellenlänge der Anregungsstrahlung auf dem Lichtpfad ausgebildet ist, den jeweiligen Lichtpfad auf einen gemeinsamen Lichtpfad umzulenken, wobei der gemeinsame Lichtpfad eine Optik aufweist, die zur Fokussierung der Anregungsstrahlungen auf eine außerhalb der Vorrichtung angeordnete Probe ausgebildet ist. Mindestens n-1 der Umlenkvorrichtungen weisen jeweils eine erste Transmission für Wellenlängen aus einem Wellenlängenbereich, der um die jeweilige erste Wellenlänge liegt, und eine zweite Transmission für jeweilige andere Wellenlängen auf, wobei jeweils die erste Transmission kleiner als die zweite Transmission ist und wobei die Wellenlängenbereiche nicht überlappen.

Hierdurch kann über ein großes Wellenlängengebiet jeweils Anregungsstrahlung unterschiedlicher Wellenlängen auf die Probe fokussiert werden und die rückgestreute Strahlung (Raman-Signal) nachfolgend in einer Detektoreinheit (vorzugsweise Spektrometer mit CCD-Kamera) geleitet werden. Aufgrund der gewählten Transmissionen der Umlenkvorrichtung ist es möglich, die Anregungsstrahlung aus dem optischen Sammelpfad, der zur Detektoreinheit geleitet werden kann, wirksam zu eliminieren, jedoch die jeweils spektral nahe der Wellenlängen der Anregungsstrahlungen liegende Ramanstrahlung (besonders bevorzugt die Stokes-Banden) durch sämtliche Umlenkvorrichtungen hindurch entlang des optischen Sammelpfads passieren zu lassen. Da die n Anregungslichtquellen äquidistant voneinander beabstandet sind, kann das interessierende Spektrum für Anregungswellenlängen aus verschiedenen Spektralbereichen besonders effizient detektiert werden.

Vorzugsweise wird das an der Probe gestreute Raman-Signal von der Optik gesammelt und auf den gemeinsamen Lichtpfad in entgegengesetzter Richtung gelenkt.

Vorzugsweise ist die Reflexion der mindestens n-1 Umlenkvorrichtungen für die jeweilige erste Wellenlänge größer als 0,5, bevorzugter größer als 0,6, noch bevorzugter größer als 0,7, noch bevorzugter größer als 0,8 und noch bevorzugter größer als 0,9.

Vorzugsweise ist jeweils ein Betrag einer Differenz zwischen Wellenlängen im Spektrum zueinander benachbarter Anregungsstrahlungen größer als eine Summe von Bandbreiten der jeweiligen zueinander benachbarten Anregungsstrahlungen. Als Bandbreite wird dasjenige Wellenlängenintervall um die jeweilige erste Wellenlänge (Zentralwellenlänge höchster Intensität) verstanden, in dem vorzugsweise 90%, bevorzugter 95%, noch bevorzugter 99% der Energie der Anregungsstrahlung liegen.

Vorzugsweise ist die Distanz in Wellenzahlen zwischen im Spektrum zueinander benachbarten Anregungsstrahlungen mindestens 10 cm⁻¹, bevorzugter um mindestens 1000 cm⁻¹ und noch bevorzugter um mindestens 2000 cm⁻¹.

Vorzugsweise weist auch die höchstens eine verbleibende Umlenkvorrichtung für Wellenlängen aus einem Wellenlängenbereich, der um eine erste Wellenlänge der Anregungsstrahlung auf dem der verbleibenden Umlenkvorrichtung zugeordneten Lichtpfad liegt, eine erste Transmission und eine zweite Transmission für jeweilige andere Wellenlängen auf, wobei die zweite Transmission der zweiten Umlenkvorrichtung größer als die erste Transmission der höchstens einen verbleibenden Umlenkvorrichtung ist.

Vorzugsweise sind die erste Umlenkvorrichtung und/oder die zweite Umlenkvorrichtung als Notchfilter oder als Volumen Bragg Gitter ausgebildet.

Vorzugsweise ist die zweite Transmission der ersten Umlenkvorrichtung, die zweite Transmission der Umlenkvorrichtungen jeweils größer als 0,5, bevorzugter größer als 0,6, noch bevorzugter größer als 0,7, noch bevorzugter größer als 0,8 und noch bevorzugter größer als 0,9.

Durch die so gewählten Transmissionsverhältnisse wird gewährleistet, dass die elastisch an der Probe rückgestreute Strahlung mit Wellenlängen der jeweiligen Anregungslichtquellen durch die Umlenkvorrichtungen aus dem Sammelpfad gelenkt werden, wobei die inelastisch an der Probe rückgestreute Strahlung (egal welcher Anregungslichtquelle) sämtliche Umlenkvorrichtungen passieren und somit der Detektion zugänglich gemacht werden kann. Dadurch können Raman-Spektren unterschiedlicher Anregungswellenlängen (Anregungslichtquellen) gleichzeitig oder zeitlich sequentiell auf ein und denselben Detektor zur Untersuchung geleitet werden, ohne optische Elemente bewegen zu müssen.

Die Breite der Flanken niedriger Transmission der Umlenkvorrichtungen ist durch die jeweilige Bandbreite der Anregungslichtquellen nach unten begrenzt. Zwischen den Wellenlängen der jeweiligen Anregungslichtquellen soll ein ausreichender Abstand derart gewählt werden, dass innerhalb des gewählten spektralen Inspektionsbereichs entsprechende Raman-Signale nicht von einer Umlenkvorrichtung benachbarter Wellenlänge (bezogen auf Anregungslichtquelle) aus dem Sammelpfad herausgelenkt werden.

In einer bevorzugten Ausführungsvariante wird die erfindungsgemäße Vorrichtung als Optode für eine Vorrichtung zur Detektion eines Raman-Spektrums verwendet. Besonders bevorzugt werden Raman-Spektren für jede der Anregungswellenlängen generiert und nachfolgend eine Auswahl einer bevorzugten Anregungswellenlängen getroffen, mit der dann die eigentliche Vermessung der Probe mittels mindestens eines Raman-Spektrums erfolgt.

Vorzugsweise ist n größer als 3, bevorzugter größer als 5, noch bevorzugter größer als 7 und noch bevorzugter größer als 9.

Diese Lichtquellen werden auf unterschiedlichen Lichtpfaden und zugeordneten Vorrichtungen zur Umlenkung der einzelnen Lichtstrahlen auf einen gemeinsamen Lichtpfad überlagert, wobei der gemeinsame Lichtpfad dieselbe Optik zur Fokussierung der Lichtstrahlen auf das Untersuchungsobjekt im Anregungspfad umfasst.

Die einzelnen Lichtquellen werden dabei durch An- und Abschalten der jeweiligen Anregung adressiert. Durch Auswahl der geeigneten Anregungsquelle kann die bezogen auf die Raman-Signale optimale Wellenlänge ausgewählt werden. So können auch für unbekannte Stoffe mit einem Messsystem ohne Wechsel von Komponenten die für eine Analyse hinreichend notwendigen Signale erzeugt werden. Bevorzugt erfolgt die Auswahl der optimalen Wellenlänge derart, dass eine maximale Intensität des Raman-Signals oder ein maximales Signal-Rausch-Verhältnis vorliegt.

Die Umschaltung zwischen den verschiedenen Wellenlängen der erfindungsgemäßen Vorrichtung erfolgt unter Verzicht auf mechanisch bewegliche Teile. Hierdurch wird eine besonders robuste und gleichzeitig kompakte Vorrichtung zur Verfügung gestellt. Insbesondere kann die erfindungsgemäße Vorrichtung justage- und montagefrei betrieben werden.

In einer anderen möglichen Ausführungsform werden die einzelnen Lichtstrahlen vor der Umlenkung durch Strahlformungsoptiken geformt und durch Bandpassfilter gefiltert.

In einer weiteren möglichen Ausführungsform sind auf den unterschiedlichen Lichtpfaden Strahlformungsoptiken und Bandpassfilter angeordnet.

Es ist ebenfalls möglich, auf dem gemeinsamen Lichtpfad eine Strahlformungsoptik so anzuordnen, dass jeder der einzelnen Lichtstrahlen einer Strahlformung unterworfen werden kann, ehe der einzelne Lichtstrahl auf die jeweilige Umlenkvorrichtung trifft.

In einer besonders zur kompakten Bauweise geeigneten Ausführungsform sind die Anregungslichtquellen beidseitig einer weiterhin umfassten Sammeloptik mit einer Streulichtstrahlformungsoptik und einer Transferoptik angeordnet, wobei die Sammeloptik geeignet ist, von einem im Fokus befindlichen Objekt gestreutes Licht eines der einzelnen Lichtstrahlen über dieselbe Optik und über einen den gemeinsamen Lichtpfad umfassenden Sammellichtpfad zu sammeln und an einem Ausgang zur Verfügung zu stellen, und wobei die unterschiedlichen Lichtpfade parallel zu und zu dem gemeinsamen Lichtpfad beabstandet sind und Spiegel zur Umlenkung der einzelnen Lichtstrahlen auf die auf dem Sammellichtpfad angeordneten, auch Notchfilter genannte, Kerbfilter umfassen.

Wird als Anregungslichtquelle ein Laser eingesetzt, der elektrisch auf zwei nah beieinander liegenden Wellenlängen emittiert, wie sie für SERDS benötigt werden, kann diese Möglichkeit der Trennung der Raman-Signale vom Fluoreszenzhintergrund ebenfalls für das Messsystem implementiert werden.

Im Falle der Implementierung SERDS mittels einer elektrisch auf zwei nah beieinander liegenden Wellenlängen emittierenden Laserdiode wird diese zur alternierenden Erzeugung unterschiedlicher Anregungswellenlängen mittels des an die Laserdiode angelegten elektrischen Stroms alternierend mit zwei unterschiedlichen Anregungsbedingungen angesteuert, wobei das Hin- und Herschalten zwischen den Anregungsbedingungen vorzugsweise mit einer Frequenz größer als 0,1 Hz und vorzugsweise kleiner als 1 kHz erfolgt.
Die spektrale Analyse der vom zu untersuchenden Medium gestreuten elektromagnetischen Strahlung kann beispielsweise durch Einkoppeln der gestreuten Strahlung in einen Spektrographen erfolgen, wobei aus der gestreuten Strahlung für die unterschiedlichen Anregungswellenlängen jeweils mindestens ein Raman-Spektrum detektiert wird und aus den mindestens zwei detektierten Raman-Spektren unterschiedlicher Anregungswellenlängen ein Raman-Spektrum des zu untersuchenden Mediums ermittelt wird, in dem der Fluoreszenzuntergrund rechnerisch eliminiert ist. Dabei ist es bevorzugt, die Detektion der einzelnen Raman-Spektren unterschiedlicher Anregungswellenlängen mit der alternierenden Ansteuerung der Laserdiode zu synchronisieren. Dabei kann die Detektion eines Raman-Spektrums jeweils innerhalb eines Zeitintervalls erfolgen, in dem die Stromstärke des an die Laserdiode angelegten Stroms konstant gehalten wird.
Die Unterdrückung des Fluoreszenzhintergrunds ist besonders dann effizient möglich, wenn die Anregungslichtquellen Laserdioden sind, die jeweils zur Erzeugung von Anregungsstrahlung mindestens zweier unterschiedlicher Wellenlängen mit mindestens zwei unterschiedlichen Anregungsbedingungen ansteuerbar sind.
In einer möglichen Ausführungsform wird zusätzlich im Anregungspfad die Optik, die die Fokussierung auf das Messobjekt realisiert, auf einen beweglichen Halter montiert, der z.B. elektromechanisch stufenlos, ohne Austausch der Optik an den zur Messung benötigten Fokuspunktes oder einer Fokusregion angepasst wird.
Dies erlaubt die individuelle Anpassung der Position des Fokusses außerhalb der Optode an die Position der zu untersuchenden Probe und deren Eigenschaften für eine optimale Sammlung generierter Raman-Signale. Darüber hinaus erlaubt es die Ausblendung von Signalen außerhalb des Fokus und die verbesserte Detektion von spektroskopischen Signalen bei optisch trüben oder transparenten Proben oder Proben in Verpackungen.

Gemäß einem weiteren Ausführungsbeispiel der vorliegenden Erfindung wird eine Vorrichtung zur Detektion eines Raman-Spektrums eines zu untersuchenden Mediums offenbart, welche die erfindungsgemäße Vorrichtung als Optode verwendet. Dabei umfasst die Optode Mittel zur Einkopplung der emittierten Anregungsstrahlung in das zu untersuchende Medium. Weiterhin umfasst die Optode Mittel zur Einkopplung der vom zu untersuchenden Medium gestreuten Strahlung in ein spektral-optisches System, wobei ein Datenverarbeitungsgerät vorgesehen ist, das mit dem spektral-optischen System verbunden ist. Das Datenverarbeitungsgerät ist ausgebildet, aus den mindestens zwei mittels des spektral-optischen Systems detektierten Spektren unterschiedlicher Anregungswellenlängen ein Raman-Spektrum des zu untersuchenden Mediums zu berechnen, in dem der Fluoreszenzuntergrund rechnerisch separiert wird. Vorzugsweise ist das spektral-optische System durch einen Spektrographen mit Vielkanaldetektor z.B. CCD-Zeile ausgebildet.

Es ist besonders bevorzugt, dass die die Laserdiode zur Erzeugung unterschiedlicher Anregungswellenlängen mit einer von einem Modulator modulierten Stromquelle verbunden ist, und der Modulator die Stromquelle alternierend moduliert. Vorzugsweise erfolgt das Hin- und Herschalten mit einer Frequenz größer als 0,1 Hz. Vorzugsweise ist die Vorrichtung mit einem spektral-optischen System gekoppelt. Vorzugsweise ist ein Datenverarbeitungsgerät mit dem Modulator verbunden. Vorzugsweise ist die Detektion von Raman-Spektren unterschiedlicher Anregungswellenlängen mit der alternierenden Ansteuerung der Laserdiode synchronisiert.

Es ist weiterhin bevorzugt, dass die auf dem gemeinsamen Lichtpfad angeordnete Optik zur Fokussierung der Anregungsstrahlung auf eine Probe ansteuerbar und ein Abstand der Optik von einem Fenster (bzw. einer äußeren Facette der Vorrichtung über welche die Anregungsstrahlung austritt) und damit die Position des Fokuspunktes oder einer Fokusregion außerhalb der Vorrichtung durch Ansteuerung der Optik einstellbar ist. Dadurch wird es vorteilhafterweise möglich, die Strahlformung innerhalb der Optode an die optischen Eigenschaften einer z.B. transparenten oder trüben Probe in einfacher Weise anzupassen. In einer besonders bevorzugten Ausführungsvariante wird die erfindungsgemäße Vorrichtung als Optode für eine Vorrichtung zur Detektion eines Raman-Spektrums verwendet, wobei Raman-Spektren für jede der Anregungswellenlängen und jeweils für unterschiedliche Fokustiefen generiert und nachfolgend eine Auswahl einer bevorzugten Anregungswellenlänge und einer bevorzugten Fokustiefe getroffen wird, mit denen dann die eigentliche Vermessung der Probe mittels mindestens eines Raman-Spektrums erfolgt.

### Zeichnungen

Beispielhafte Optoden und Ausführungsbeispiele der Erfindung werden anhand der Zeichnungen und der nachfolgenden Beschreibung näher erläutert.
- Figur 1: zeigt eine erste beispielhafte Optode,
- Figur 2: zeigt eine zweite beispielhafte Optode
- Figur 3: zeigt eine dritte beispielhafte Optode, in der die vorliegende Erfindung realisiert ist,
- Figuren 4A-4E: zeigen unterschiedliche Konstellationen von Probenpositionierungen zu Brennweite einer gemeinsamen Optik einer beispielhaften Optode nach einer Ausführungsform der Erfindung,
- Figur 5: zeigt die Transmission der Vielzahl von Umlenkvorrichtungen der Ausführungsvariante der Fig. 3 in Abhängigkeit der Wellenzahl, und
- Figur 6: zeigt die Transmission der Vielzahl von Umlenkvorrichtungen der Ausführungsvariante der Fig. 3 in Abhängigkeit der Wellenlänge.

### Beispielhafte Optoden und Ausführungsformen der Erfindung

Die hier beispielhaft vorgestellte Vorrichtung mit einer Anordnung optischer Elemente zeigt ein neuartiges Konzept einer Optode für die Raman-Spektroskopie mit der Möglichkeit eines Wechsels der Anregungswellenlänge über einen weiten Spektralbereich z.B. vom NIR (785 nm) zum UV (266 nm) und einer einstellbaren Position des Laserfokus bzw. Sammelfleck ohne Austausch der Optiken. Dabei erfolgt der Wechsel der Anregungswellenlänge und der dazu gehörigen Sammelpfade ohne bewegliche Teile.

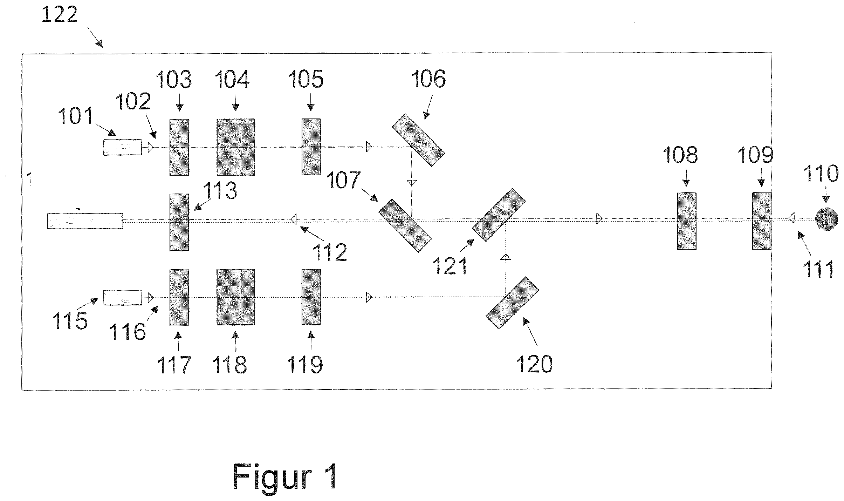

Figur 1 zeigt eine erste beispielhafte Ausführungsform einer Vorrichtung mit einer Anordnung optischer Elemente. Die Vorrichtung 122 weist zwei Laserlichtquellen 101, 115 auf. Die Laserlichtquellen 101, 115 sind zur Erzeugung von Laserlichtstrahlen 102, 116 mit verschiedenen Wellenlängen geeignet. Die erzeugten Laserlichtstrahlen 102, 116 werden dabei auf individuellen Lichtpfaden geführt, auf denen optische Strahlformungseinrichtungen 103, 117 zum Beispiel Linsen, optische Isolatoren 104, 118 und Bandpassfilter 105, 119 angeordnet sind.
Die Lichtstrahlen werden über Spiegel 106, 120 auf Notch- bzw. Kerbfilter 107, 121 umgelenkt, wobei die Kerb- oder Notchfilter 107, 121 auf einem gemeinsamen Lichtpfad angeordnet sind, so dass die Lichtstrahlen nach Umlenken durch den Notch- und Kerbfilter 107, 121 einen gemeinsamen Lichtweg zurücklegen. Auf diesem gemeinsamen Lichtweg ist eine weitere Strahlformungsoptik 108 und ein Fenster 109 angeordnet, wobei die weitere Strahlformungsoptik 108 die Lichtstrahlen auf einen Fokuspunkt fokussiert und somit eine Probe 110, die sich im Fokuspunkt befindet, einer Ramananalyse zugänglich macht. Von der Probe 110 zurück gestreutes Licht 111 wird durch das Fenster 109 und die weitere Strahlformungsoptik 108 auf dem gemeinsamen Lichtweg abgebildet. Dann durchdringt das Streulicht die Notchfilter 121, 107 in entgegen gesetzter Richtung. Die Notchfilter blocken das Laserlicht und den elastisch gestreuten Anteil des Streulichts. Die Raman-Signale passieren die Notchfilter und treffen auf eine weitere Strahlformungsoptik 113. Diese fokussiert und koppelt die Raman-Photonen in eine Transferoptik, beispielsweise eine Glasfaser, die die Raman-Signale zu einer Analyseeinheit z.B. einem Spektrometer inklusive einem Vielkanaldetektor, etwa eine CCD, transportiert.
Anstelle der Spiegel 106, 120 können auch Volumen Bragg-Gitter verwendet werden. Zusätzlich oder alternativ lassen sich auch die Notch- bzw. Kerbfilter 107, 121 durch Volumen Bragg-Gitter ersetzen.

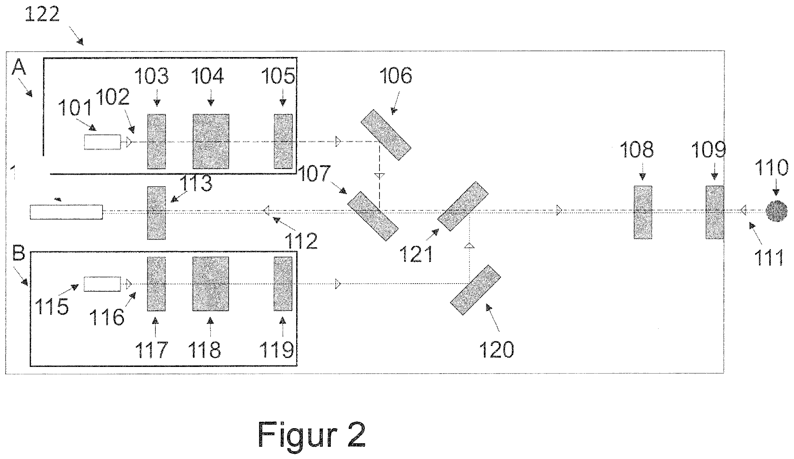

In Figur 2 ist eine weitere Ausführungsform der in Figur 1 gezeigten Ausführungsform dargestellt. In dieser Ausführungsform in Figur 2 sind die Laserquellen 101, 115 die zugehörigen optischen Strahlformungseinrichtungen 103, 117, die zugehörigen optischen Isolatoren 104, 118 und die zugehörigen optischen Bandpassfilter 105, 119 in Modulen A, B angeordnet, die vom mechanischem Aufbau identisch sind bis auf die Laserwellenlänge der Laserlichtquellen 101 und 115.
In Figur 3 ist die Optode gemäß einem Ausführungsbeispiel der Erfindung auf eine Vielzahl von Laserlichtquellen erweitert. Module A₁ bis Aₙ und B₁ bis Bₙ sind parallel zu einem parallelen Lichtpfand angeordnet und zur Emission von Licht verschiedener Wellenlängen entsprechend auf parallelen Lichtpfaden, die zu dem gemeinsamen Lichtpfad beabstandet sind, geeignet. Spiegel M_A₁ bis M_Aₙ und M_B₁ bis M_Bₙ lenken die Lichtstrahlen an den parallelen Lichtpfaden auf Notch- bzw. Kerbfilter F_A₁ bis F_Aₙ und F_B₁ bis F_Bₙ um. Die Notchfilter F_A₁ bis F_Aₙ und F_B₁ bis F_Bₙ sind auf einem gemeinsamen Lichtpfad angeordnet, der parallel zu den einzelnen Lichtpfaden, auf den die einzelnen Laserlichtstrahlen emittiert wurden, angeordnet ist. Auf diesem gemeinsamen Lichtpfad werden die durch die Notchfilter umgelenkten Lichtstrahlen durch eine Strahlformungsoptik O₁ strahlgeformt und durch ein Fenster W auf einem Fokussierungspunkt und eine Fokussierungsregion fokussiert. Eine Probe P, die sich in der Fokussierungspunkt oder Fokussierungsregion befindet, streut das Anregungslicht durch das Fenster W und die Strahlformungsoptik O₁ (hier dient O₁ jetzt als Sammeloptik) zurück und das zurück gestreute Licht legt den gemeinsamen Lichtweg in umgekehrter Richtung durch die Notchfilter F_A₁ bis F_Aₙ und F_B₁ bis F_Bₙ zurück. Das Laserlicht und das elastisch gestreute Licht werden von den Notchfiltern geblockt. Die spektral verschobenen Raman-Signale passieren die Notchfilter und werden von einer weiteren Strahlformungsoptik O₂ auf eine Faser F fokussiert. Die hier eingekoppelten Raman-Signale werden über diese Faser F zu einer Auswerteeinheit transportiert.

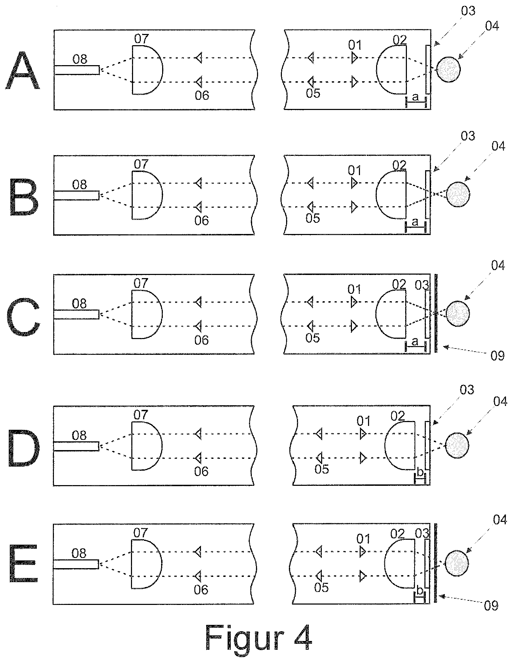

Figuren 4A bis 4E zeigen unterschiedliche Konstellationen von Probenpositionierung zur Brennweite einer gemeinsamen einstellbaren Optik einer beispielhaften Optode nach einer Ausführungsform der Erfindung. In Abbildung 4A ist gezeigt, wie ein Anregungslicht 1 über eine optische Strahlformungseinheit 02, die der Strahlformungseinheit 108 aus der Figur 1 entspricht, über ein Fenster 03, die des Fensters 109 aus Figur 1 entspricht, auf einem Fokuspunkt oder einer Fokusregion mit einem Abstand a zwischen Strahlformungseinheit 02 und Fenster 03 fokussiert wird. Eine Probe 04, die sich im Fokuspunkt oder der Fokusregion befindet, streut das Anregungslicht 01 zurück als Licht 05. Das Licht 05 wird durch die Strahlformungseinrichtung 02 auf die optische Strahlformungseinrichtung 07 projiziert, die der Strahlformungseinrichtung 113 aus Figur 1 entspricht. Die Strahlformungseinrichtung 07 wiederum fokussiert das Licht in eine Glasfaser 08. Die Figur 4B zeigt den analogen Fall zur Figur 4A, allerdings ist jetzt die Probe 04 nicht mehr im Fokuspunkt, so dass eine maximale Einkopplung des Ramansignals von der Probe nicht mehr möglich ist. In Figur 4C erfolgt die außerfokale Positionierung der Probe 04 in Folge einer, zwischen der Probe und der Optode angeordneten Zwischenschicht aus durchsichtigem oder trübem Material 09, die dazu führt, dass der Fokalpunkt verschoben wird. Wie in den Figuren 4D und 4E dargestellt, kann durch Änderungen des Abstandes zwischen Strahlformungseinheit 02 und Fenster 03 auf eine Länge ***b*** ein Objekt, das zuvor bei einem Fokalabstand der Länge ***a*** außerhalb des Fokus lag oder aufgrund von einer transparenten oder trüben Zwischenschicht außerhalb des Fokus gerückt wurde, wieder in den Fokus gelangen und somit einer Analyse zugänglich gemacht werden.

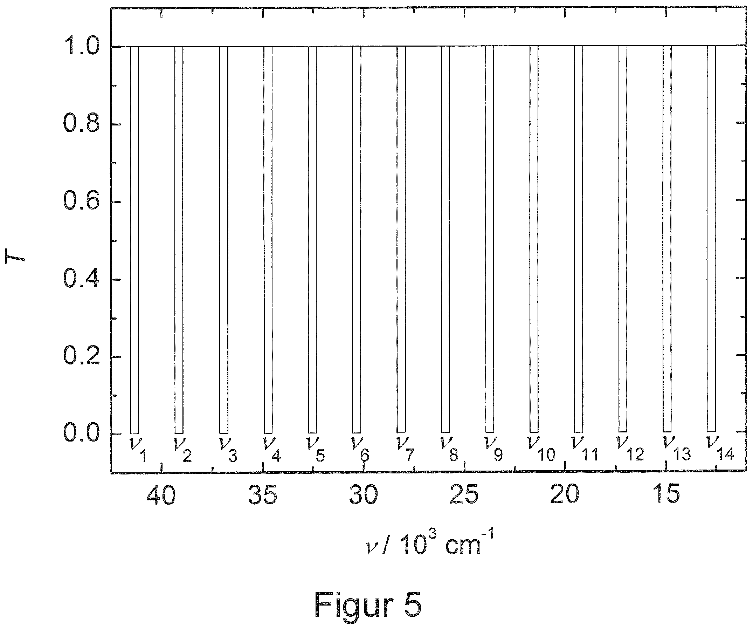

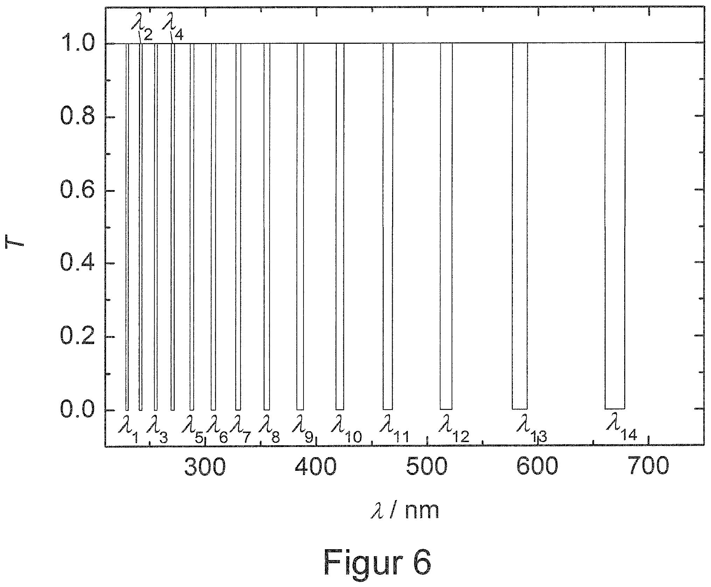

Die Figuren 5 und 6 zeigen die Transmission T der 16 Umlenkvorrichtungen der bevorzugten Ausführungsvariante der Fig. 3 in Abhängigkeit der absoluten Wellenzahl (Fig. 5) bzw. der Wellenlänge (Fig. 6). Dabei wurden folgende Wellenlängen λ1 bis λ14 verwendet: λ1 = 230 nm, λ2 = 242 nm, λ3 = 256 nm, λ4 = 271 nm, λ5 = 288 nm, λ6 = 307 nm, λ7 = 330 nm, λ8 = 355 nm, λ9 = 386 nm, λ10 = 421 nm, λ11 = 464 nm, λ12 = 517 nm, λ13 = 583 nm und λ14 = 669 nm. Es ist erkennbar, dass ein Raman-Spektren Im Bereich zwischen 230 nm und 669 nm unter Zuhilfenahme von 14 Anregungslichtquellen gemessen werden können. Insbesondere für unbekannte Proben können so mit den 14 Anregungslichtquellen Raman-Spektren generiert werden und anhand der Raman-Spektren und Eigenschaften der Probe eine geeignete Wahl der Anregungswellenlänge getroffen werden. Dabei ist es zur Abdeckung des Spektrums bevorzugt, dass die Zentralwellenlängen der Anregungslichtquellen bezogen auf die absolute Wellenzahl gleichmäßig über das Spektrum verteilt, also äquidistant voneinander beabstandet sind. Dabei sind Wellenzahldifferenzen im Sinne der Erfindung dann als gleich und damit die zugehörigen Wellenzahlen als äquidistant anzusehen, wenn die Wellenzahldifferenzen um weniger als 5% von einander abweichen. Bei äquidistanter Beabstandung ist der Abstand beispielsweise ein minimaler Abstand. Der minimale Abstand kann etwa 10 cm⁻¹, 1000 cm⁻¹ oder 2000 cm⁻¹ betragen. Der minimale Abstand garantiert ein Detektionsfenster zwischen wellenzahlbenachbarten Anregungslichtquellen, inelastisch in das Detektionsfenster gestreute Strahlung kann dann von elastisch gestreuter Strahlung mittels der Notchfilter getrennt werden. Bei nicht gleichmäßiger Verteilung der Zentralwellenlängen der Anregungslichtquellen bezogen auf die absolute Wellenzahl wird ein Einhalten des minimalen Abstands zwischen benachbarten Anregungslichtquellenwellenzahlen ebenfalls bevorzugt. In einer anderen beispielhaften Ausführungsform mit nicht gleichmäßiger Verteilung der Zentralwellenlängen sind die Abstände zwischen benachbarten Anregungslichtquellenwellenzahlen gleich dem minimalen Abstand oder einem Vielfachen des minimalen Abstands. Die Breite der vorzugsweise als Notchfilter ausgebildeten Umlenkvorrichtungen ist derart gewählt, dass mindestens 99% der elastisch gestreuten Strahlung der Anregungslichtquellen aus dem Sammelpfad herausgelenkt werden. Die Breite der Flanken der 14 Notchfilter wird so klein wie möglich gehalten, so dass zwischen den Notchfiltern eine hohe Transmission für die anderen Wellenlängen vorgesehen ist, die der inelastischen Streuung des Lichts (Stokes Bereich und Anti-Stokes Bereich) entsprechen.

## Patentansprüche

1. Vorrichtung für die Raman-Spektroskopie mit einer Anordnung optischer Elemente, umfassend:
eine Vielzahl von n>2 Anregungslichtquellen (A₁ bis Aₙ und B₁ bis Bₙ) zur Emission von n Anregungsstrahlungen mit jeweils unterschiedlichen, in Wellenzahlen äquidistant voneinander beabstandeten Emissionen, die jeweils entlang eines einer Vielzahl von n unterschiedlichen Lichtpfaden geführt sind;
wobei jedem Lichtpfad eine Umlenkvorrichtung (F_A₁ bis F_Aₙ und F_B₁ bis F_Bₙ) zugeordnet ist, die für eine jeweilige erste Wellenlänge der Anregungsstrahlung auf dem zugeordneten Lichtpfad ausgebildet ist, den jeweiligen Lichtpfad auf einen gemeinsamen Lichtpfad umzulenken,
wobei der gemeinsame Lichtpfad eine Optik (O₁) aufweist, die zur Fokussierung der Anregungsstrahlungen ausgebildet ist,
wobei mindestens n-1 der Umlenkvorrichtungen (F_A₁ bis F_Aₙ und F_B₁ bis F_Bₙ) jeweils eine erste Transmission für Wellenlängen aus einem jeweiligen Wellenlängenbereich, der um die jeweilige erste Wellenlänge liegt, und eine zweite Transmission für jeweilige andere Wellenlängen aufweisen, wobei jeweils die erste Transmission kleiner als die zweite Transmission ist und wobei die Wellenlängenbereiche nicht überlappen.

2. Vorrichtung nach Anspruch 1, wobei jeweils ein Betrag einer Differenz zwischen Wellenlängen im Spektrum zueinander benachbarter Anregungsstrahlungen größer ist als eine Summe von Bandbreiten der jeweiligen zueinander benachbarten Anregungsstrahlungen.

3. Vorrichtung nach einem der vorhergehenden Ansprüche, wobei die Distanz in Wellenzahlen zwischen im Spektrum zueinander benachbarten Anregungsstrahlungen mindestens 10 cm⁻¹ beträgt.

4. Vorrichtung nach einem der vorhergehenden Ansprüche, wobei auch die höchstens eine verbleibende Umlenkvorrichtung für Wellenlängen aus einem Wellenlängenbereich, der um eine zugehörige erste Wellenlänge der Anregungsstrahlung auf dem der verbleibenden Umlenkvorrichtung zugeordneten Lichtpfad liegt, und eine zweite Transmission für zugehörige andere Wellenlängen aufweist, wobei die erste Transmission kleiner als die zweite Transmission höchstens einen verbleibenden Umlenkvorrichtung ist.

5. Vorrichtung nach einem der vorhergehenden Ansprüche, wobei die mindestens n-1 Umlenkvorrichtungen (F_A₁ bis F_Aₙ und F_B₁ bis F_Bₙ) als Notchfilter oder als Volumen Bragg Gitter ausgebildet sind.

6. Vorrichtung nach einem der vorhergehenden Ansprüche, wobei die erste Transmission der die mindestens n-1 Umlenkvorrichtungen (F_A₁ bis F_Aₙ und F_B₁ bis F_Bₙ) jeweils kleiner als 0,5 ist.

7. Vorrichtung nach einem der vorhergehenden Ansprüche, wobei die zweite Transmission der mindestens n-1 Umlenkvorrichtungen (F_A₁ bis F_Aₙ und F_B₁ bis F_Bₙ), größer als 0,5 ist.

8. Vorrichtung nach einem der vorangehenden Ansprüche, wobei n größer als 3 ist.

9. Vorrichtung nach einem der vorhergehenden Ansprüche, wobei die Vorrichtung ein Fenster (W) aufweist und wobei die Optik (O₁) ansteuerbar und ein Abstand der Optik (O₁) von dem Fenster (W) und so die Position des Fokuspunktes oder einer Fokusregion außerhalb der Vorrichtung durch Ansteuerung der Optik (O₁) einstellbar ist.

10. Vorrichtung nach einem der vorhergehenden Ansprüche, wobei auf den unterschiedlichen Lichtpfaden Strahlformungsoptiken und/oder Bandpassfilter angeordnet sind.

11. Vorrichtung nach Anspruch 9, wobei die Anregungslichtquellen (A₁ bis Aₙ und B₁ bis Bₙ) beidseitig einer weiterhin umfassten Sammeloptik mit einer Streulichtstrahlformungsoptik (O₂) und einer zur Optik (O₁) konfokal angeordneten Transferoptik (F) angeordnet sind, wobei die Sammeloptik geeignet ist, von einem im Fokus befindlichen Objekt (P) gestreutes Licht eines der einzelnen Lichtstrahlen über das Fenster (W) und über die Optik (O₁) und über einen den gemeinsamen Lichtpfad umfassenden Sammellichtpfad zu sammeln und an einem Ausgang zur Verfügung zu stellen.

12. Vorrichtung nach einem der vorhergehenden Ansprüche, wobei die Anregungslichtquellen (A₁ bis Aₙ und B₁ bis Bₙ) Laserdioden sind, die jeweils zur Erzeugung von Anregungsstrahlung mindestens zweier unterschiedlicher Wellenlängen mit mindestens zwei unterschiedlichen Anregungsbedingungen ansteuerbar sind.

## Claims

1. Apparatus for Raman spectroscopy with an arrangement of optical elements, comprising:
a plurality of n>2 excitation light sources (A₁ to Aₙ and B₁ to Bₙ) for emitting n excitation radiations with respectively different emissions equally spaced from each other in wavenumbers which are guided along one of a plurality of n different light paths, respectively;
wherein a deflection device (F_A₁ to F_Aₙ and F_B₁ to F_Bₙ) is associated with every light path, which deflection device is formed on the associated light path for a respective first wavelength of the excitation radiation in order to deflect the respective light path onto a common light path,
wherein the common light path comprises an optical system (O₁) which is adapted to focus the excitation radiations,
wherein at least n-1 of the deflection devices (F_A₁ to F_Aₙ and F_B₁ to F_Bₙ) comprise, respectively, a first transmission for wavelengths of one respective wavelength range around the respective first wavelength, and a second transmission for respective other wavelengths, wherein the first transmission is smaller than the second transmission, respectively, and wherein the wavelength ranges do not overlap.

2. Apparatus according to claim 1, wherein, respectively, an amount of a difference between wavelengths in the spectrum of excitation radiations adjacent to each other is greater than a sum of band widths of the respective excitation radiations adjacent to each other.

3. Apparatus according to one of the preceding claims, wherein the distance in wavenumbers between excitation radiations adjacent to each other in the spectrum is at least 10 cm⁻¹.

4. Apparatus according to one of the preceding claims, wherein the at most one remaining deflection device, too, comprises for wavelengths of a wavelength range around an associated first wavelength of the excitation radiation on the light path associated with the remaining deflection device, and a second transmission for associated other wavelengths, wherein the first transmission is smaller than the second transmission of the at most one remaining deflection device.

5. Apparatus according to one of the preceding claims, wherein the at least n-1 deflection devices (F_A₁ to F_Aₙ and F_B₁ to F_Bₙ) are formed as notch filters or volume Bragg gratings.

6. Apparatus according to one of the preceding claims, wherein the first transmission of the at least n-1 deflection devices (F_A₁ to F_Aₙ and F_B₁ to F_Bₙ) is, respectively, smaller than 0.5.

7. Apparatus according to one of the preceding claims, wherein the second transmission of the at least n-1 deflection devices (F_A₁ to F_Aₙ and F_B₁ to F_Bₙ) is greater than 0.5.

8. Apparatus according to one of the preceding claims, wherein n is greater than 3.

9. Apparatus according to one of the preceding claims, wherein the apparatus comprises a window (W), and wherein the optical system (O₁) can be driven and a distance of the optical system (O₁) can be adjusted from the window (W) and thus the position of the focal point or a focal region can be adjusted outside the apparatus by driving the optical system (O₁).

10. Apparatus according to one of the preceding claims, wherein beam shaping optical systems and/or band-pass filters are arranged on the different light paths.

11. Apparatus according to claim 9, wherein the excitation light sources (A₁ to Aₙ and B₁ to Bₙ) are arranged on both sides of a further comprised optical collection system with an optical system (O₂) for shaping a scattered light beam and a transfer optical system (F) confocally arranged with respect to the optical system (O₁), wherein the optical collection system is adapted to collect light of one of the individual light beams scattered by an object (P) in the focus by the window (W) and by the optical system (O₁) and by a collection light path comprising the common light path, and to provide it at an output.

12. Apparatus according to one of the preceding claims, wherein the excitation light sources (A₁ to Aₙ and B₁ to Bₙ) are laser diodes which, respectively, can be driven under at least two different excitation conditions in order to generate excitation radiation of at least two different wavelengths

## Revendications

1. Dispositif de spectroscopie Raman doté d'un an agencement d'éléments optiques, comprenant :
une pluralité de n>2 sources de lumière d'excitation (A₁ à Aₙ et B₁ à Bₙ) servant à émettre n rayonnements d'excitation ayant des émissions différentes, respectivement, équidistantes les unes des autres en nombre d'ondes qui sont guidées le long d'un trajet lumineux d'une pluralité de n trajets lumineux différents, respectivement ;
un dispositif de déviation (F_A₁ à F_Aₙ et F_B₁ à F_Bₙ) étant associé à chaque trajet lumineux, le dispositif de déviation étant formé sur le trajet lumineux associé, pour une première longueur d'onde respective du rayonnement d'excitation, afin de dévier le trajet lumineux respectif sur un trajet lumineux commun, le trajet lumineux commun comprenant un système optique (O₁) formé pour focaliser les rayonnements d'excitation, au moins n-1 des dispositifs de déviation (F_A₁ à F_Aₙ et F_B₁ à F_Bₙ) comprenant une première transmission pour des longueurs d'onde d'une plage de longueurs d'onde respective située autour de la première longueur d'onde respective, et
une seconde transmission pour d'autres longueurs d'onde respectives, respectivement, la première transmission étant inférieure à la seconde transmission, respectivement, et les plages de longueurs d'onde ne se chevauchant pas.

2. Dispositif selon la revendication 1, dans lequel respectivement un montant d'une différence entre des longueurs d'onde se trouvant dans le spectre de rayonnements d'excitation adjacents les uns aux autres est supérieur à une somme de largeurs de bande des rayonnements d'excitation respectifs adjacents les uns aux autres.

3. Dispositif selon l'une des revendications précédentes, dans lequel la distance en nombres d'onde entre des rayonnements d'excitation adjacents les uns aux autres dans le spectre est d'au moins 10 cm⁻¹.

4. Dispositif selon l'une des revendications précédentes, dans lequel également ledit tout au plus un dispositif de déviation restant comprend pour des longueurs d'onde d'une plage d'onde située sur le trajet lumineux associé au dispositif de déviation restant autour d'une première longueur d'onde associée du rayonnement d'excitation, et comprend une seconde transmission pour d'autres longueurs d'ondes associées, la première transmission étant inférieure à la seconde transmission dudit tout au plus un dispositif de déviation restant.

5. Dispositif selon l'une des revendications précédentes, dans lequel les au moins n-1 dispositifs de déviation (F_A₁ à F_Aₙ et F_B₁ à F_Bₙ) sont formés en tant que filtres coupe-bande ou en tant que réseaux de Bragg en volume.

6. Dispositif selon l'une des revendications précédentes, dans lequel la première transmission des au moins n-1 dispositifs de déviation (F_A₁ à F_Aₙ et F_B₁ à F_Bₙ) est inférieure à 0,5, respectivement.

7. Dispositif selon l'une des revendications précédentes, dans lequel la seconde transmission des au moins n-1 dispositifs de déviation (F_A₁ à F_Aₙ et F_B₁ à F_Bₙ) est supérieure à 0,5.

8. Dispositif selon l'une des revendications précédentes, dans lequel n est supérieur à 3.

9. Dispositif selon l'une des revendications précédentes, dans lequel le dispositif comprend une fenêtre (W) et dans lequel le système optique (O₁) peut être commandé, et une distance du système optique (O₁) peut être ajustée par la fenêtre (W), et ainsi la position du point focal ou d'une région focale peut être ajustée à l'extérieur du dispositif en commandant le système optique (O₁).

10. Dispositif selon l'une des revendications précédentes, dans lequel des systèmes optiques de mise en forme de faisceau et/ou des filtres passe-bande sont disposés sur les trajets lumineux différents.

11. Dispositif selon la revendication 9, dans lequel les sources de lumière d'excitation (A₁ à Aₙ et B₁ à Bₙ) sont dotées, sur les deux côtés d'un système de collecte optique compris en outre, d'un système optique de mise en forme d'un faisceau lumineux diffusé (O₂) et d'un système optique de transfert (F) disposé de manière confocale par rapport au système optique (O₁), le système optique de collecte étant adapté pour collectionner de la lumière d'un faisceau lumineux des faisceaux lumineux individuels diffusée par un objet (P) se trouvant dans le foyer via la fenêtre (W) et via le système optique (O₁) et via un trajet de lumière de collecte comprenant le trajet lumineux commun, et de la fournir à une sortie.

12. Dispositif selon l'une des revendications précédentes, dans lequel les sources de lumière d'excitation (A₁ à Aₙ et B₁ à Bₙ) sont des diodes laser qui peuvent respectivement être commandées à au moins deux conditions d'excitation différentes afin de générer du rayonnement d'excitation d'au moins deux longueurs d'onde différentes.
